# FASCICULE DE BREVET EUROPEEN

(11) **EP 3 881 021 B1**
(45) Date de publication et mention de la délivrance du brevet: **18.09.2024**
(21) Numéro de dépôt: 19805187.2
(22) Date de dépôt: 12.11.2019
(51) Int. Cl.: F41F 3/10, B63G 8/32

(54) **SYSTÈME LANCE-ARMES POUR UN NAVIRE SUBMERSIBLE**
ABSCHUSSSYSTEM FÜR EIN TAUCHBOOT
WEAPON LAUNCH SYSTEM FOR A SUBMERSIBLE VESSEL

(30) Priorité: 12.11.2018 FR 1871499
(43) Date de publication de la demande: 22.09.2021
(73) Titulaire: Naval Group, 75015 Paris (FR)
(72) Inventeur: FAZILLAULT, Vincent, 16600 Ruelle-sur-Touvre (FR); MORAUX, Alexandre, 16600 Ruelle-sur-Touvre (FR); MONGRAND, Stéphane, 16600 Ruelle-sur-Touvre (FR); JAGAILLOUX, Fabien, 16600 Ruelle-sur-Touvre (FR); LAMOTTE, Arnaud, 16600 Ruelle-sur-Touvre (FR); REVEL, Sylvain, 16600 Ruelle-sur-Touvre (FR); DISSIRIER, Rémi, 16600 Ruelle-sur-Touvre (FR); ARRIGNON, Geoffrey, 16600 Ruelle-sur-Touvre (FR); DESSIMOULIE, Laura, 16600 Ruelle-sur-Touvre (FR); NIOT, Stephane, 16600 Ruelle-sur-Touvre (FR)
(74) Mandataire: Lavoix
(86) Numéro de dépôt international: PCT/EP2019/080997
(87) Numéro de publication internationale: WO 2020/099388

(56) Documents cités:
- GB-A- 2 379 416
- US-A1- 2016 257 384
- US-B1- 8 677 920

## Description

La présente invention concerne un système lance-armes pour un navire submersible.

Par navire submersible, on entend notamment un sous-marin, par exemple un sous-marin militaire.

Un système lance-armes est connu par exemple de US 8 677 920 B1.

De manière connue en soi, les systèmes intégrés dans les sous-marins militaires sont soumis à de nombreuses contraintes spécifiques à ce milieu. Parmi ces contraintes, on peut notamment citer des chocs, vibrations, discrétion acoustique, émission/sensibilité électromagnétique, encombrement, sécurité de plongée passive et active, sécurités des armes, rendement énergétique, etc.

De plus, de fait de leur utilisation, des installations relatives aux armes des sous-marins, telles que par exemple des tubes lance-armes, doivent répondre à de nombreuses exigences en termes de performance. Ces exigences concernent notamment le temps de mise en oeuvre d'une arme, la consommation énergétique, le coût de possession, la sécurité, la fiabilité et la disponibilité.

Ainsi, classiquement, ces installations sont mises en oeuvre à bord des sous-marins en utilisant des actionneurs hydrauliques. Les actionneurs hydrauliques permettent en effet de répondre à la plupart des contraintes et exigences précitées.

Toutefois, les installations utilisant des actionneurs hydrauliques présentent une architecture encombrante, lourde, énergivore et chère en exploitation et en maintenance. Cela est dû principalement à un réseau de tuyauterie important nécessaire pour assurer le fonctionnement de ces installations.

Ce réseau permet généralement d'un côté, de commander de manière distante le fonctionnement des actionneurs hydrauliques et de l'autre côté, de fournir une puissance nécessaire à ces actionneurs. Il peut s'étendre ainsi tout au long du navire ce qui implique un encombrement très important.

La présente invention a pour but de proposer une architecture utilisable pour un système lance-armes embarqué qui permet d'éviter l'utilisation des actionneurs hydrauliques tout en respectant les contraintes et exigences précitées.

À cet effet, l'invention a pour objet un système lance-armes pour un navire submersible, conforme aux caractéristiques de la revendication 1
Suivant d'autres aspects avantageux de l'invention, le système comprend une ou plusieurs des caractéristiques des revendications 2 à 9, prise(s) isolément ou suivant toutes les combinaisons techniquement possibles.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'un système lance-armes selon l'invention, ce système comprenant notamment des moyens d'actionnement et des moyens de commande ;
- la figure 2 est une vue schématique détaillée des moyens d'actionnement de la figure 1 ; et
- la figure 3 est une vue schématique illustrant le fonctionnement des moyens de commande de la figure 1.

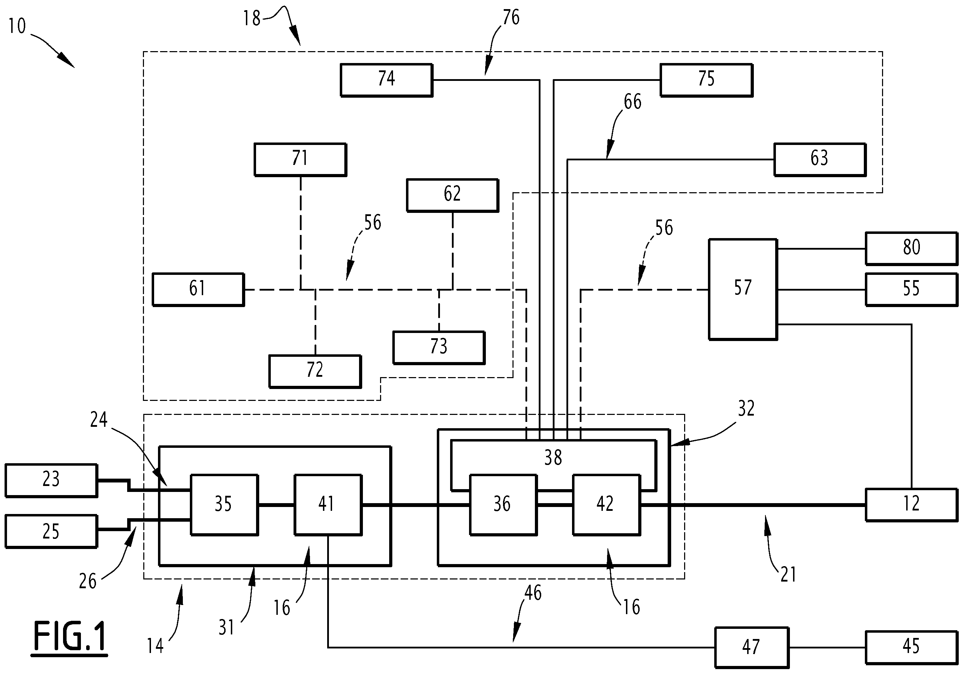

Le système lance-armes 10 de la figure 1 est destiné à être embarqué à bord d'un sous-marin et permet d'activer le lancement d'une arme à partir de ce sous-marin. Pour ce faire, le système lance-armes 10 est destiné à être associé à au moins un tube de lancement d'armes et permet d'exercer un enchainement d'actions mécaniques sur ce tube pour lancer un engin sous-marin contenu dans celui-ci. L'engin sous-marin correspond notamment à une arme mais dans le cas général, peut comprendre tout autre objet susceptible d'être lancé à partir du sous-marin.

Dans la suite de la description, le système lance-armes 10 sera expliqué en référence à un seul tube de lancement d'armes, par exemple celui de bâbord. Toutefois, dans le cas général, il doit être compris que ce système peut être associé à plusieurs tubes de lancement d'armes, par exemple à deux tubes, celui de bâbord et celui de tribord.

En référence à la figure 1, le système lance-armes 10 comprend au moins un actionneur électrique 12, des moyens d'actionnement 14 de l'actionneur électrique 12, des moyens de sécurité 16 surveillant le fonctionnement des moyens d'actionnement 14 et des moyens de commande 18 commandant les moyens d'actionnement 14.

L'actionneur électrique 12 est associé au tube de lancement d'armes et permet d'exercer une action mécanique sur ce tube afin de déclencher un lancement. Cette action mécanique peut comprendre par exemple la pressurisation du tube avec une pression nécessaire pour un lancement.

L'actionneur électrique 12 est raccordé aux moyens d'actionnement 14 par une liaison électrique 21 et apte à exercer l'action mécanique correspondante lorsque la liaison électrique 21 fournit une puissance électrique nécessaire.

Bien entendu, lorsque le système lance-armes 10 est associé à plusieurs tubes de lancement d'armes, il comprend au moins un actionneur pour chacun de ces tubes.

Les moyens d'actionnement 14 sont aptes à créer dans la liaison électrique 21 la puissance électrique nécessaire pour actionner l'actionneur électrique 12.

Pour ce faire, les moyens d'actionnement 14 sont raccordés à une source principale d'alimentation 23 via une liaison électrique 24 et à une source secourue d'alimentation 25 via une liaison électrique 26.

Les sources principale et secourue d'alimentation 23, 25 correspondent par exemple respectivement à des réseaux électriques principal et secouru présents à bord du sous-marin.

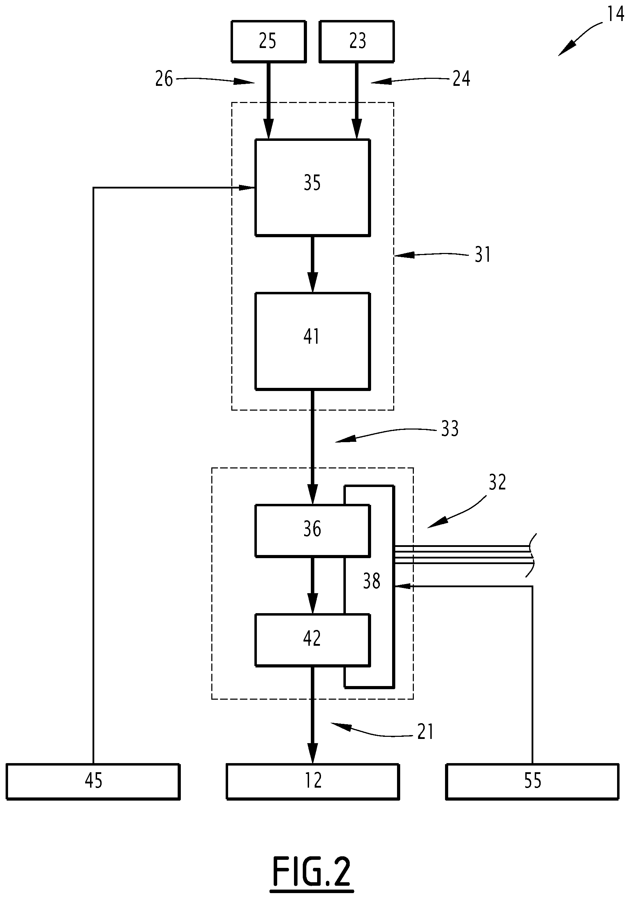

Les moyens d'actionnement 14 sont illustrés plus en détail sur la figure 2.

Ainsi, en référence à cette figure 2, les moyens d'actionnement 14 se présentent sous la forme de deux coffrets, dits premier coffret 31 et deuxième coffret 32.

Chacun de ces coffrets 31, 32 présentent un boitier contenant des composants mécaniques/électroniques/électriques nécessaires pour mettre en oeuvre les fonctions correspondantes comme cela sera expliqué par la suite.

Avantageusement, chaque coffret 31, 32 est étanche. De plus, il peut être résistant à des chocs, à de différentes pressions ainsi qu'à d'autres types d'agressions (de nature électromagnétique, thermique ou autre) susceptibles d'apparaitre dans le milieu correspondant.

Encore avantageusement, les coffrets 31, 32 sont configurés pour être disposés dans des compartiments/enceintes différentes du sous-marin.

Entre eux, les coffrets sont raccordés par une liaison électrique 33.

Le premier coffret 31 comprend un module de puissance 35 raccordé directement aux sources d'alimentation 23, 25.

Le module de puissance 35 permet ainsi d'alimenter le système lance-armes 10 en sélectionnant l'une des sources d'alimentation 23, 25.

En particulier, la source principale d'alimentation 23 est choisie lorsque le système lance-armes 10 est dans son mode de fonctionnement nominal et la source secourue d'alimentation 25 est choisie lorsque le système lance-armes 10 est dans son mode de fonctionnement défaillant.

Le module de puissance 35 est composé ainsi de relais et/ou circuits électriques correspondants permettant de sélectionner l'une ou l'autre source d'alimentation.

En sélectionnant l'une des deux sources, le module de puissance 35 permet en outre d'isoler en amont les composants électriques correspondants de l'autre source et de délester l'énergie électrique dans le système 10.

En complément, le module de puissance 35 comprend d'autres composants électriques permettant par exemple d'adapter la puissance électrique fournie par les sources d'alimentation 23, 25 à l'alimentation de l'actionneur 12.

Le deuxième coffret 32 comprend un module de commande 36 permettant de commander l'actionneur électrique 12 en alimentant la liaison électrique 21 avec la puissance électrique fournie par le module de puissance 35.

Pour ce faire, le module de commande 36 est raccordé via un contrôleur 38 également intégré au deuxième coffret 32, aux moyens de commande 18 et apte à recevoir des commandes fournies par ces moyens 18. Il est également apte à traiter ces commandes.

Le module de commande 36 se présente ainsi au moins partiellement sous la forme d'un calculateur comprenant des logiciels nécessaires pour assurer le traitement des commandes correspondantes et/ou sous la forme de circuits logiques programmables configurés pour assurer un tel traitement.

Les moyens de sécurité 16 forment deux barrières de sécurité aptes à surveiller le fonctionnement des moyens de commande 14 indépendamment l'une de l'autre.

Pour se faire, les moyens de sécurité 16 se présentent sous la forme d'un premier module de sécurité 41 intégré dans le premier coffret 31 et d'un deuxième module de sécurité 42 intégré dans le deuxième coffret 32.

En particulier, le premier module de sécurité 41 raccorde électriquement le module de puissance 35 au module de commande 36 et permet de surveiller notamment le fonctionnement de ce module de puissance 35.

Le premier module de sécurité 41 est par ailleurs raccordé à des premiers moyens d'instrumentation 45 via une liaison de commande directe 46.

Les premiers moyens d'instrumentation 45 permettent d'observer le fonctionnement d'au moins certains composants du système lance-armes 10 et de son environnement. Ainsi, par exemple, ces moyens d'instrumentation 45 se présentent sous la forme d'un premier ensemble de capteurs. Chaque capteur de cet ensemble est associé à au moins un composant du système lance-armes 10 ou de son environnement et permet de mesurer une grandeur physique (telle que pression, température, etc.) associée à ce composant. La jonction de ces capteurs au premier module de sécurité 41 se fait par exemple via une première boite de jonction 47 visible sur la figure 1.

Pour surveiller le fonctionnement du module de puissance 35, le premier module de sécurité 41 met en oeuvre une première logique de surveillance.

Cette première logique de surveillance est mise en oeuvre en utilisant des dispositifs matériels comme par exemple des relais de sécurité et présente ainsi une logique dite « câblée ».

Cette logique permet par exemple de contrôler la puissance électrique fournie par le module de puissance 35 et en cas de sa non-conformité, de couper la liaison électrique 33 entre le module de puissance 35 et le module de commande 36.

Le deuxième module de sécurité 42 raccorde électriquement le module de commande 36 à l'actionneur 12 et permet de surveiller le fonctionnement notamment de ce module de commande 36.

Le deuxième module de sécurité 42 est par ailleurs raccordé à des deuxièmes moyens d'instrumentation 55 via une liaison 56 différente et dissemblable de la liaison 46 raccordant le premier module de sécurité 41 aux premiers moyens d'instrumentation 45.

La liaison 56 comprend en particulier un support physique différent de celui de la liaison 46 de caractéristiques différentes, comme par exemple une sensibilité électromagnétique différente.

Ainsi, par exemple, cette liaison 56 correspond à un réseau informatique du sous-marin expliqué plus en détail par la suite.

Comme dans le cas des premiers moyens d'instrumentation 45, les deuxièmes moyens d'instrumentation 55 se présentent sous la forme d'un deuxième ensemble de capteurs. Ces capteurs sont analogues aux capteurs du premier ensemble mais présentent des dispositifs différents et indépendants de ceux-ci. Avantageusement, les capteurs du deuxième ensemble fonctionnent selon des technologies différentes de celles des capteurs du premier ensemble. La jonction des capteurs du deuxième ensemble à la liaison 56 est assurée pour une deuxième boite de jonction 57 visible sur la figure 1.

De plus, la jonction de la liaison 56 au deuxième module de contrôle 42 est assurée par le contrôleur 38.

Pour surveiller le fonctionnement du module de commande 36, le deuxième module de sécurité 42 met en oeuvre une deuxième logique de surveillance qui est différente et dissemblable de la première logique de surveillance.

Ainsi, par exemple, cette deuxième logique de surveillance est mise en oeuvre en utilisant au moins partiellement un logiciel implémentant un automate de sécurité. Dans ce cas, le deuxième module de sécurité 42 se présente au moins partiellement sous la forme d'un calculateur mettant en oeuvre un tel logiciel.

La deuxième logique de surveillance consiste en particulier à analyser la cohérence de l'ensemble des données accessibles au deuxième module de sécurité 42 via le réseau informatique 56 et les différentes liaisons de commande.

Lorsque la deuxième logique de surveillance n'est pas vérifiée, le deuxième module de sécurité coupe la liaison électrique 21 entre le module de commande 36 et l'actionneur électrique 12.

Avantageusement, selon un exemple de réalisation, le deuxième module de sécurité 42 est raccordé en outre au premier module de sécurité 41 par une liaison de données. Dans ce cas, ce deuxième module de sécurité 42 est apte à recevoir des informations de sécurité produites par le premier module de sécurité 41 et à analyser la cohérence de ces informations de sécurité avec des informations de sécurité produites par lui-même. Si ces informations ne sont pas cohérentes, le deuxième module de sécurité 42 est également apte à couper la liaison électrique 21.

Les moyens de commande 18 permettent de commander le fonctionnement du module de commande 36 et sont raccordés à ce module 36 via le contrôleur 38.

En référence à la figure 1, les moyens de commande 18 comprennent un poste de commande distant 61, un poste de commande local 62 et un panneau de commande local 63.

Le poste de commande distant 61 est disposé par exemple dans un centre de pilotage du sous-marin et se présente sous la forme d'une interface homme-machine connue en soi.

Le poste de commande distant 61 est raccordé au module de commande 36 via le réseau informatique 56 du sous-marin et est apte à envoyer des commandes sous la forme de données numériques à ce module 36.

Le réseau informatique 56 du sous-marin présente un réseau informatique protégé connu en soi. Ce réseau répond à l'ensemble des normes relatives à sa sécurité ainsi que à la sécurité des données transmises via ce réseau.

Le poste de commande local 62 est disposé à proximité du tube de lancement d'armes auquel le système 10 est associé.

Ce poste de commande local 62 se présente sous la forme d'une interface homme-machine également connue en soi comme par exemple un écran tactile.

Tout comme le poste de commande distant 61, le poste de commande local 62 est raccordé au module de commande 36 via le réseau informatique 56 et est apte à contrôler le fonctionnement de ce module 36 en transmettant des commandes correspondantes sous la forme de données numériques via ce réseau 56.

Le panneau de commande local 63 est disposé également à proximité du tube de lancement d'armes correspondant et est raccordé au module de commande 56 via une liaison de commande directe 66 distincte du réseau informatique 56.

Ce panneau de commande local 63 est apte à commander le fonctionnement du module de commande 56 en transmettant des commandes correspondantes via cette liaison de commande directe 66. Les commandes sont transmises par exemple sous la forme de signaux analogiques.

Le panneau de commande local 63 se présente par exemple sous la forme de boutons mécaniques et/ou voyants associés à chaque commande.

Avantageusement, le panneau de commande local 63 comprend en outre des moyens de contrôle permettant d'activer l'alimentation électrique de l'actionneur électrique 12 par la source secourue d'alimentation 25 en cas de perte de la source principale d'alimentation 23.

Pour ce faire, le panneau de commande local 63 est raccordé par exemple au module de puissance 35 via une liaison de commande spécifique (non-illustrée sur la figure 1) afin de commander la sélection de la source secourue d'alimentation 25.

Bien entendu, lorsque le système lance-armes 10 est associé à plusieurs tubes de lancement d'armes, il comprend avantageusement un poste de commande local et un panneau de commande local pour chacun des tubes.

Dans l'exemple de réalisation de la figure 1, les moyens de commande 18 comprennent encore un module d'interfaces d'armes 71, un système de mangement de combat 72, un module de manutention des armes 73, un module d'autorisation de tir 74 et un tableau de sécurité de plongée 75.

Le module d'interfaces d'armes 71, le système de mangement de combat 72 et le module de manutention des armes 73 sont raccordés au réseau informatique 56. Le tableau de sécurité de plongée 75 est raccordé au contrôleur 38 via une liaison directe. Ces composants sont connus en soi et ne seront pas décrits en détail par la suite.

Le module d'autorisation de tir 74 est raccordé au module de commande 36 via une liaison de commande directe 76 et via le contrôleur 38. Ce module est également connu en soi et permet notamment d'autoriser un tir, c'est-à-dire l'actionnement de l'actionneur 12, lorsqu'une clef spécifique (physique ou numérique) est introduite dans ce module.

Par ailleurs, selon un exemple particulier de réalisation de l'invention illustré sur la figure 1, l'actionneur électrique 12 est raccordé aux moyens d'actionnement 14 également via le réseau informatique 56 à travers la deuxième boite de jonction 57 pour par exemple communiquer l'état de son fonctionnement à ces moyens.

Selon le même exemple de réalisation, le système lance-armes 10 comprend en outre des troisièmes moyens d'instrumentation 80 indépendants des premiers et deuxièmes moyens d'instrumentation 45, 55. Ces troisièmes moyens d'instrumentation 80 sont raccordés aux moyens d'actionnement 14 via le réseau informatique 56 à travers la deuxième boite de jonction 57 et permettent par exemple de transmettre à ces moyens des informations relatives aux états de fonctionnement de différents composants du système 10.

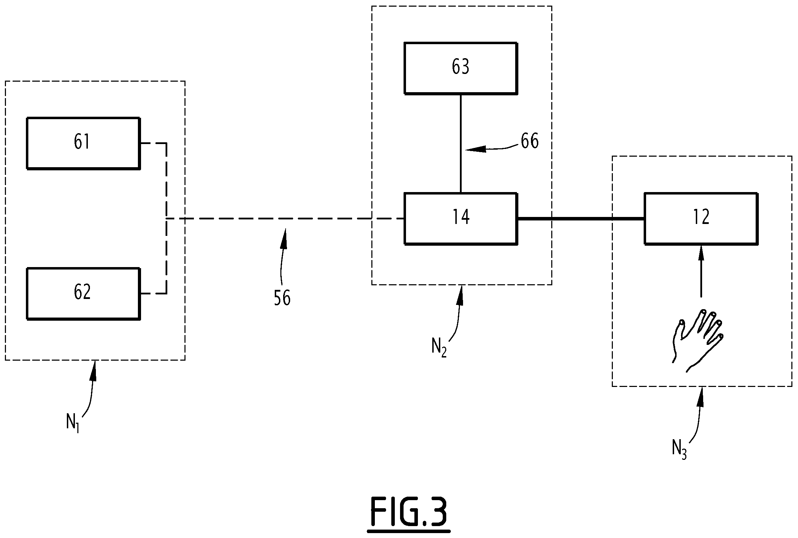

Le fonctionnement du système lance-armes 10 sera désormais expliqué en référence notamment à la figure 3 illustrant schématiquement différents niveaux de commandes mis en oeuvre par les moyens de commande 18 de ce système 10.

Initialement, l'ensemble des composants du système lance-armes 10 sont dans leur mode de fonctionnement nominal. Le fonctionnement des moyens d'actionnement 14 est surveillé par les moyens de sécurité 16 en utilisant les deux barrières de sécurité décrites précédemment. Les moyens d'actionnement 14 sont alimentés par la source principale d'alimentation 23.

Pour lancer un engin sous-marin, l'opérateur introduit une commande via le poste de commande distant 61 ou le poste de commande local 62 qui forment ensemble un premier niveau de commande N₁. Ce niveau de commande est prioritaire par rapport aux autres niveaux.

La commande émise alors par l'un des postes 61, 62 est transmise via le réseau informatique 56 aux moyens d'actionnement 14 pour actionner l'actionneur 12. Après une analyse de cette commande ainsi que les informations provenant éventuellement des autres modules, le module de commande 36 alimente la liaison électrique 21 par la puissance électrique transmise par le module de puissance 35.

En cas par exemple de la perte du réseau informatique 56, le système lance-armes 10 passe en mode de fonctionnement défaillant et les commandes sont données à partir d'un deuxième niveau de commande N₂ qui est formé par le panneau de commande 63. Dans ce cas, les commandes issues de ce panneau 63 sont transmises aux moyens d'actionnement 14 via la liaison de commande 66.

En cas par exemple de perte de la source principale d'alimentation 23, le système lance-armes 10 passe en mode de fonctionnement dégradé.

Dans ce mode, les commandes sont par exemple données à partir du deuxième niveau N₂ pour notamment activer l'alimentation par la source secourue d'alimentation 24.

Lorsque cela n'est pas possible, l'actionneur électrique 12 peut être encore actionné manuellement par un opérateur. Il s'agit donc d'un troisième niveau de commande N₃.

On conçoit alors que la présente invention présente un certain nombre d'avantages.

Tout d'abord, l'architecture proposée du système lance-armes 10 permet de rendre possible l'utilisation d'un actionneur électrique au lieu d'un actionneur hydraulique utilisé classiquement dans les sous-marins. En effet, cette architecture permet de répondre à toutes les exigences et contraintes liées à l'environnement spécifique des sous-marins.

Le remplacement d'un actionneur hydraulique par un actionneur électrique permet donc d'éviter l'utilisation d'un réseau de tuyauterie complexe en rendant ainsi le système plus compact et plus simple en mise en place et en maintenance.

En outre, l'architecture proposée présente une architecture en blocs ce qui rend possible la modification de l'un des composants de ce système sans entrainer des modifications sur les autres composants.

Ainsi, par exemple, il est possible que différents sous-marins présentent de différents réseaux d'alimentation électriques. Dans ce cas, il suffit de modifier uniquement le module de puissance du système lance-armes pour l'adapter au sous-marin correspondant.

De plus, certaines fonctions du système lance-armes peuvent présenter un niveau de sécurité moins important que les autres. Dans ce cas, l'une des barrières de sécurité peut être enlevée pour ces fonctions.

Selon un autre exemple, le système lance-armes peut comprendre un actionneur déjà existant. Dans ce cas, pour le commander, il suffit d'adapter de manière appropriée uniquement le module de commande.

Par ailleurs, l'architecture proposée du système lance-armes selon l'invention permet de garantir un haut niveau de sécurité de ce système.

En effet, selon cette architecture, le traitement logique est séparé entre deux modules de sécurité distincts qui sont intégrés dans deux coffrets distincts. Ainsi, dans le cas où l'un de ces modules perd son intégrité, la fonction de sécurité est assurée par l'autre module. Une telle perte peut par exemple survenir en cas de perte d'étanchéité sur l'un des coffrets.

En outre, selon l'architecture proposée, les informations de sécurité et les commandes sont acheminées vers les modules correspondants via des supports physiques différents qui sont implémentés selon des technologies différentes. Cela permet alors d'accroitre le niveau de sécurité du système.

Finalement, l'architecture du système lance-armes selon l'invention permet de garantir à celui-ci un haut niveau de disponibilité.

En effet, en cas de perte du réseau informatique, le système lance-armes peut être commandé à partir du panneau de commande qui est raccordé aux moyens d'actionnement via une liaison directe et indépendante du réseau informatique.

En cas de perte de la source principale d'alimentation, il reste possible d'utiliser la source secourue et en cas de perte totale des sources d'alimentation électrique, il reste possible d'actionner manuellement l'actionneur.

## Revendications

1. Système lance-armes (10) pour un navire submersible, comprenant :
- au moins un actionneur électrique (12) apte à exercer un enchainement d'actions mécaniques sur un tube de lancement d'armes ;
- un poste de commande distant (61) ;
- des moyens d'actionnement (14) de l'actionneur électrique (12) avec une puissance électrique, les moyens d'actionnement (14) étant raccordés à l'actionneur électrique (12) via une liaison électrique (21) et au poste de commande distant (61) via un réseau informatique (56), le poste de commande distant (61) étant apte à contrôler le fonctionnement des moyens d'actionnement (14) en transmettant des commandes à ces moyens via le réseau informatique (56) ;
- des moyens de sécurité (16) aptes à surveiller le fonctionnement des moyens d'actionnement (14) ;
le système (10) est **caractérisé en ce qu'**il comprend en outre un panneau de commande local (63) raccordé via une liaison de commande directe (66) aux moyens d'actionnement (14), le panneau de commande local (63) étant apte à contrôler le fonctionnement des moyens d'actionnement (14) en transmettant des commandes à ces moyens via la liaison de commande directe (66).

2. Système (10) selon la revendication 1, comprenant en outre un poste de commande local (62) raccordé via le réseau informatique (56) aux moyens d'actionnement (14), le poste de commande local (62) étant apte à contrôler le fonctionnement des moyens d'actionnement (14) en transmettant des commandes à ces moyens via le réseau informatique (56).

3. Système (10) selon l'une quelconque des revendications précédentes, comprenant en outre un module d'autorisation de tir (74) raccordé via une liaison de commande directe (76) aux moyens d'actionnement (14) et apte à autoriser un tir en cas de réception d'une clef correspondante.

4. Système (10) selon l'une quelconque des revendications précédentes, dans lequel les moyens de sécurité (16) comprennent un premier module de sécurité (41) apte à surveiller la sécurité de l'alimentation électrique des moyens d'actionnement (14).

5. Système (10) selon la revendication 4, dans lequel le premier module de sécurité (41) est raccordé à un premier ensemble de capteurs (45) via une liaison directe (46).

6. Système (10) selon l'une quelconque des revendications précédentes, dans lequel les moyens de sécurité (16) comprennent un deuxième module de sécurité (42) apte à surveiller la sécurité de commandes destinées aux moyens d'actionnement (14).

7. Système (10) selon la revendication 6, dans lequel le deuxième module de sécurité (42) est raccordé à un deuxième ensemble de capteurs (55) via le réseau informatique (56).

8. Système (10) selon l'une quelconque des revendications précédentes, comprenant en outre un système de management de combat (72) raccordé au réseau informatique (56).

9. Système (10) selon l'une quelconque des revendications précédentes, dans lequel les moyens d'actionnement (14) sont aptes à être alimentés en énergie électrique par une source principale d'alimentation (23) et par une source secourue (25) d'alimentation pour actionner l'actionneur électrique (12).

## Patentansprüche

1. Waffenabschusssystem (10) für ein Tauchboot, umfassend:
- mindestens einen elektrischen Aktuator (12), der imstande ist, eine Abfolge mechanischer Aktionen auf ein Waffenabschussrohr auszuüben;
- einen entfernten Kommandoposten (61);
- Betätigungsmittel (14) des elektrischen Aktuators (12) mit einer elektrischen Leistung, wobei die Betätigungsmittel (14) über eine elektrische Verbindung (21) mit dem elektrischen Aktuator (12) und über ein Informatiknetz (56) mit dem entfernten Kommandoposten (61) verbunden sind, wobei der entfernte Kommandoposten (61) imstande ist, den Betrieb der Betätigungsmittel (14) zu steuern, indem er über das Informatiknetz (56) Befehle an diese Mittel überträgt;
- Sicherheitsmittel (16), die imstande sind, den Betrieb der Betätigungsmittel (14) zu überwachen;
wobei das System (10) **dadurch gekennzeichnet ist, dass** es ferner einen lokalen Kommandoposten (63) umfasst, die über eine direkte Steuerverbindung (66) mit den Betätigungsmitteln (14) verbunden ist, wobei der lokale Kommandoposten (63) imstande ist, den Betrieb der Betätigungsmittel (14) zu steuern, indem er Befehle über die direkte Steuerverbindung (66) an diese Mittel überträgt.

2. System (10) nach Anspruch 1, umfassend ferner einen lokalen Kommandoposten (62), der über das Computernetzwerk (56) mit den Betätigungsmitteln (14) verbunden ist, wobei der lokale Kommandoposten (62) imstande ist, den Betrieb der Betätigungsmittel (14) zu steuern, indem er Befehle über das Computernetzwerk (56) an diese Mittel überträgt.

3. System (10) nach einem der vorhergehenden Ansprüche, das ferner ein Schussfreigabemodul (74) umfasst, das über eine direkte Steuerverbindung (76) mit den Betätigungsmitteln (14) verbunden und imstande ist, bei Empfang eines entsprechenden Schlüssels einen Schuss freizugeben.

4. System (10) nach einem der vorhergehenden Ansprüche, wobei die Sicherheitsmittel (16) ein erstes Sicherheitsmodul (41) umfassen, das imstande ist, die Sicherheit der Stromversorgung der Betätigungsmittel (14) zu überwachen.

5. System (10) nach Anspruch 4, wobei das erste Sicherheitsmodul (41) über eine direkte Verbindung (46) mit einer ersten Gruppe von Sensoren (45) verbunden ist.

6. System (10) nach einem der vorhergehenden Ansprüche, wobei die Sicherheitsmittel (16) ein zweites Sicherheitsmodul (42) umfassen, das imstande ist, die Sicherheit von Befehlen zu überwachen, die für die Betätigungsmittel (14) bestimmt sind.

7. System (10) nach Anspruch 6, wobei das zweite Sicherheitsmodul (42) über das Computernetzwerk (56) mit einer zweiten Gruppe von Sensoren (55) verbunden ist.

8. System (10) nach einem der vorhergehenden Ansprüche, ferner umfassend ein Kampfmanagementsystem (72), das mit dem Computernetzwerk (56) verbunden ist.

9. System (10) nach einem der vorhergehenden Ansprüche, wobei die Betätigungsmittel (14) imstande sind, von einer Hauptstromquelle (23) und von einer Hilfsstromquelle (25) mit elektrischer Energie versorgt zu werden, um den elektrischen Aktuator (12) zu betätigen.

## Claims

1. A weapon launch system (10) for a submersible vessel, comprising:
- at least one electrical actuator (12) capable of performing a series of mechanical actions on a weapon launch tube;
- a remote control station (61);
- actuating means (14) for actuating the electric actuator (12) with electrical power, the actuating means (14) being connected to the electric actuator (12) via an electrical link (21) and to the remote control station (61) via a computer network (56), the remote control station (61) being able to monitor the operation of the actuating means (14) by transmitting commands to these means via the computer network (56);
- security means (16) capable of monitoring the operation of the actuating means (14);
the system (10) is **characterized in that** it further comprises a local control panel (63) connected via a direct control link (66) to the actuating means (14), the local control panel (63) being capable of monitoring the operation of the actuating means (14) by transmitting commands to these means via the direct control link (66).

2. The system (10) according to the claim 1, further comprising a local control station (62) connected via the computer network (56) to the actuating means (14), the local control station (62) being adapted to monitor the operation of the actuating means (14) by transmitting commands to these means via the computer network (56).

3. The system (10) according to any one of the preceding claims, further comprising a firing authorization module (74) connected via a direct control link (76) to the actuating means (14) and capable of authorizing a firing in the event of receiving a corresponding key.

4. The system (10) according to any of the preceding claims, wherein the security means (16) comprises a first security module (41) capable of monitoring the security of the electrical supply to the actuating means (14).

5. The system (10) according to the claim 4, wherein the first security module (41) is connected to a first set of sensors (45) via a direct link (46).

6. The system (10) according to any of the preceding claims, wherein the security means (16) comprises a second security module (42) capable of monitoring the security of the controls for the actuating means (14).

7. The system (10) according to the claim 6, wherein the second security module (42) is connected to a second set of sensors (55) via the computer network (56).

8. The system (10) according to any of the preceding claims, further comprising a combat management system (72) connected to the computer network (56).

9. The system (10) according to any of the preceding claims, wherein the actuating means (14) are capable of being supplied with electrical energy from a main power source (23) and from a back-up power source (25) for actuating the electric actuator (12).
